# EUROPEAN PATENT APPLICATION

(11) **EP 4 664 948 A1**
(43) Date of publication of application: **17.12.2025**
(21) Application number: 23920548.7
(22) Date of filing: 10.02.2023
(51) Int. Cl.: H04W 8/14

(54) **INFORMATION PROCESSING METHOD AND APPARATUS, TERMINAL, AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Stöckeler, Ferdinand
(86) International application number: PCT/CN2023/075534
(87) International publication number: WO 2024/164341

(57) **Abstract**

The present application relates to the field of mobile communications, and particularly, to an information processing method and apparatus, a terminal, and a storage medium. The method comprises: when a second terminal can be found, adding identity information of the second terminal to a first list for storing identity information of candidate target terminals. In the embodiments provided in the present application, a first terminal updates an identity identifier of a second terminal in a first list for storing identity information of the candidate terminals, such that other terminals can communicate with terminals corresponding to the identity information contained in the first list by means of the first terminal, thus achieving the maintenance and update of the first list and ensuring the reliability of communication between terminals.

## Description

### TECHNICAL FIELD

The disclosure relates to the field of mobile communication technology, in particular to an information processing method, an information processing apparatus, a related user equipment (UE) and a related storage medium.

### BACKGROUND

In a mobile communication system, a UE may be connected to a network device via a UE-to-network (U2N) relay, thereby accomplishing communications via the network device. Specifically, the U2N relay may send messages to inform other UEs that the U2N relay has U2N capability, but the other UEs are unable to determine whether the U2N relay may also have other capabilities. Thus, current technology has limitations.

### SUMMARY

The embodiments of the disclosure provide an information processing method, an information processing apparatus, a related UE and a related storage medium, which not only realizes maintenance and updating of a first list, but also ensures a reliability of the communication carried out between UEs. The technical solution is provided as follows.

According to a first aspect of the disclosure, an information processing method is provided. The method is performed by a first UE acting as a first UE-to-UE (U2U) relay, and includes:
in which a second UE can be discovered, adding an information identity (Info ID) of the second UE to a first list, in which the first list is configured to store an Info ID of a candidate target UE.

According to a second aspect of the disclosure, an information processing method is provided. The method is performed by a first UE, and includes:
receiving a relay indication, in which the relay indication indicates that a second UE can be discovered.

According to a third aspect of the disclosure, an information processing method is provided. The method is performed by a second UE, and includes:
sending a relay indication, in which the relay indication indicates that the second UE can be discovered.

According to a fourth aspect of the disclosure, an information processing apparatus is provided. The apparatus includes:
an adding module, configured to, in which a second UE can be discovered, adding an Info ID of the second UE to a first list, in which the first list is configured to store an Info ID of a candidate target UE.

According to a fifth aspect of the disclosure, an information processing apparatus is provided. The apparatus includes:
a receiving module, configured to receive a relay indication, in which the relay indication indicates that a second UE can be discovered.

According to a sixth aspect of the disclosure, an information processing apparatus is provided. The apparatus includes:
a sending module, configured to send a relay indication, in which the relay indication indicates that a second UE can be discovered.

According to a seventh aspect of the disclosure, a UE is provided. The UE includes: a processor, a transceiver connected to the processor, and a memory for storing instructions executable by the processor. The processor is configured to load and execute the executable instructions to implement the information processing method as described above.

According to an eighth aspect of the disclosure, a computer-readable storage medium is provided. The computer-readable storage medium stores executable program codes, and the executable program codes are loaded and executed by a processor to implement the information processing method as described above.

According to a ninth aspect of the disclosure, a chip is provided. The chip includes a programmable logic circuit and/or a program instruction. When the chip is running on a UE, the information processing method as described above is implemented.

According to a tenth aspect of the disclosure, a computer program product is provided. When the computer program product is executed by a processor of a UE, the information processing method as described above is implemented.

In the solution provided by the embodiments of the disclosure, when the first UE determines that the second UE can be discovered via the U2U relay, it indicates that the second UE can be a candidate UE stored in the first list. Therefore, the first UE updates the Info ID of the second UE to the first list for storing the Info ID of the candidate UE, so as to facilitate that the other UEs can communicate with the UE corresponding to the Info ID included in the first list, which not only realizes the maintenance and updating of the first list, but also ensures the reliability of the communication carried out between UEs.

### BRIEF DESCRIPTION OF THE DRAWINGS

In order to clearly illustrate technical solutions of the embodiments of the disclosure, a brief description of drawings used in the embodiments of the disclosure is given below. Obviously, the drawings in the following description are only part of the embodiments of the disclosure, and for those skilled in the art, other drawings can be obtained according to these drawings without inventive works.
FIG. 1 is a block diagram of a communication system provided by an example embodiment of the disclosure.
FIG. 2 is a flowchart of an information processing method provided by an example embodiment of the disclosure.
FIG. 3 is a flowchart of an information processing method provided by an example embodiment of the disclosure.
FIG. 4 is a block diagram of an information processing apparatus provided by an example embodiment of the disclosure.
FIG. 5 is a block diagram of an information processing apparatus provided by an example embodiment of the disclosure.
FIG. 6 is a block diagram of an information processing apparatus provided by an example embodiment of the disclosure.
FIG. 7 is a block diagram of an information processing apparatus provided by an example embodiment of the disclosure.
FIG. 8 is a block diagram of an information processing apparatus provided by an example embodiment of the disclosure.
FIG. 9 is a schematic structural diagram of a communication device provided by an example embodiment of the disclosure.

### DETAILED DESCRIPTION

In order to make the objectives, technical solutions and advantages of the disclosure more clear, the implementations of the disclosure will be further described in detail below with reference to the accompanying drawings.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the disclosure. Instead, they are merely examples of apparatuses and methods consistent with aspects related to the disclosure as recited in the attached claims.

The terms used in the disclosure are only for the purpose of describing specific embodiments, and are not intended to limit the disclosure. The singular forms of "a" and "the" used in the disclosure and the attached claims are also intended to include plural forms, unless the context clearly indicates other meanings. It should also be understood that the term "and/or" as used herein refers to and includes any or all possible combinations of one or more associated listed items.

It is understandable that although the terms "first", "second" and "third" are used in the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining".

It should be noted that user information (including but not limited to UE information, user personal information, etc.), data (including but not limited to data used for analysis, stored data, displayed data, etc.) and signals involved in this application are all authorized by relevant users or fully authorized by all parties, and collection, usage and processing of relevant data all comply

Firstly, the terms involved in this application are introduced.

U2U relay: the U2U relay refers to a device that can act as a relay to realize communications between UEs, which may also be considered as a medium for communications between UEs. For example, if there are two UEs, i.e., a source UE and a target UE, the source UE may send information to the target UE via the U2U relay, and the target UE may return information to the source UE via the U2U relay.

U2N relay: the U2N relay refers to a device that can act as a relay to realize communications between a UE and a network device, which may also be considered as a medium for communications between the UE and the network device. For example, the UE may send information to the network device via the U2N relay, and the network device may also send information to the UE via the U2N relay.

Mode A: Mode A refers to a broadcast mode, that is, if a UE use Mode A to send information, it can be understood that the UE sends the information by broadcasting, and all other UEs can receive the information broadcast by the UE.

Secondly, the application scenarios of this application are described below.

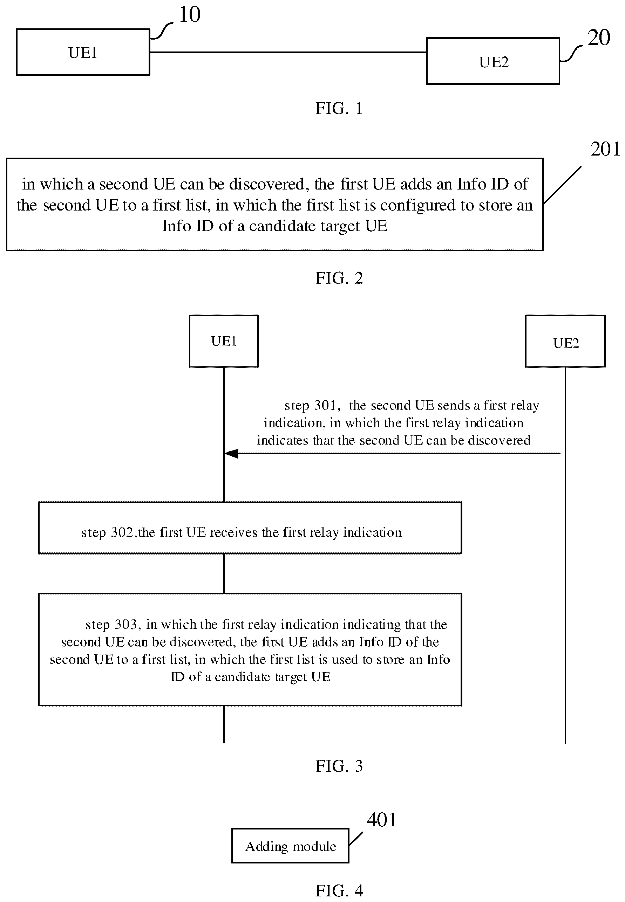

FIG. 1 is a block diagram of a communication system provided by an example embodiment of the disclosure. The communication system includes a first UE 10 and a second UE 20.

There is usually a plurality of first UEs 10 and a plurality of second UEs 20. The first UE 10 or the second UE 20 may include various handheld devices, vehicle-mounted devices, wearable devices, computing devices with wireless communication functions or other processing devices connected to a wireless modem, as well as various types of UEs and Mobile Station (MSs), etc. For convenience of description, in the embodiments of the disclosure, the above-mentioned devices are collectively referred to as UEs.

Data transmission between the first UE 10 and the second UE 20 is realized by means of wireless communication. In some embodiments, the second UE 20 sends information to the first UE 10 by broadcasting, and the first UE 10 may receive the information broadcast by the second UE 20.

FIG. 2 is a flowchart of an information processing method provided by an example embodiment of the disclosure. The method is applied to the first UE shown in FIG. 1, and includes at least part of the following contents.

At step 201, when a second UE can be discovered, the first UE adds an Info ID of the second UE to a first list, in which the first list is configured to store an Info ID of a candidate target UE.

In some embodiments, the second UE can be discovered, which is understood as that the second UE is allowed to be discovered. In addition, the second UE indicates that it can be discovered, it is understood that the second UE indicates to the first UE that the second UE is allowed to be discovered.

In some implementations, the second UE may decide whether the second UE can be discovered by other UEs, and/or the second UE may decide whether the second UE can be discovered by other UEs via a relay.

In some implementations, the second UE may receive an indication from a core network device or an application server, and it is determined that the second UE can be discovered by other UEs based on the indication.

In some implementations, the second UE may receive an indication from a core network device or an application server, and it is determined that the second UE can be discovered by other UEs via a relay UE based on the indication.

In some implementations, in a case that the second UE can be discovered by other UEs and/or the second UE can be discovered by other UEs via a relay, the second UE may be in a discoverable state. Correspondingly, in a case that the second UE cannot be discovered by other UEs or the second UE cannot be discovered by other UEs via a relay, the second UE may be in an undiscoverable state.

In some implementations, the first UE may determine whether the second UE can be discovered or not through a message sent by a core network device, an access network device or a server.

In some embodiments, the first UE maintains a first list, and all the target UEs corresponding to the Info IDs stored in the first list can be applied to the U2U relay scenario. It is understood that other UEs may communicate with a target UE corresponding to any Info ID in the first list via the first UE.

In some embodiments, the first UE is a U2U relay.

In some embodiments, the second UE can be discovered means that the second UE can be discovered via the first UE, or the second UE can be discovered means that the second UE can be discovered via a U2U relay.

In some embodiments, the first UE may receive a first relay indication. The first relay indication indicates that the second UE can be discovered, or the first relay indication may indicate that the second UE is allowed to be discovered. In an embodiment of the disclosure, the first relay indication indicates that the second UE can be discovered via a U2U relay. That is, the second UE may be used as a candidate target UE in the U2U relay scenario, which can communicate with other UEs via the U2U relay.

In some embodiments, the second UE is a U2N relay, which means that the U2N relay UE not only has a function for other UEs to communicate with the network device via this U2N relay, but also has a function to communicate with other UEs via the U2U relay.

In some embodiments, the first UE receives the Info ID of the second UE, and then stores the Info ID of the second UE in the first list.

It should be noted that in this embodiment of the disclosure, the first relay indication and the Info ID of the second UE are carried in the same message, which means that the first relay indication and the Info ID of the second UE are transmitted simultaneously through one message. Or, the first relay indication and the Info ID of the second UE are carried in different messages, which means that the first relay indication and the Info ID of the second UE are transmitted through different messages, respectively.

In some embodiments, the Info ID of the second UE is an equipment ID of the second UE.

In some embodiments, the first relay indication is represented by Relay_Indication or by other means, which is not limited by the embodiments of the disclosure.

It should be noted that embodiments of the disclosure take the first relay indication as an example. In another embodiment, the first relay indication may be referred to as first indication information or indication information, or indication information of another name, which is not limited by the embodiments of the disclosure.

In the solution provided by the embodiments of the disclosure, in a case that the first UE determines that the second UE can be discovered via the U2U relay, it indicates that the second UE can be a candidate UE stored in the first list. Therefore, the first UE updates the Info ID of the second UE to the first list for storing an Info ID of the candidate UE, so as to facilitate that the other UEs can communicate with the UE corresponding to the Info ID included in the first list, which not only realizes the maintenance and updating of the first list, but also ensures the reliability of the communication carried out between UEs.

It should be noted that this embodiment of the disclosure is explained by taking the case that the second UE can be discovered and the Info ID of the second UE is added to the first list as an example. In another embodiment, the first UE also needs to determine whether its own hop count meets a condition, so as to determine whether to add the Info ID of the second UE to the first list.

In some embodiments, if the second UE can be discovered, and the hop count of the first UE meets a hop count of a U2U relay via which the second UE can be discovered, the first UE adds the Info ID of the second UE to the first list, the first list is used to store the Info ID of a candidate target UE.

In some embodiments, when the hop count of the first UE is greater than the hop count of the U2U relay via which the second UE can be discovered, it is determined that the hop count of the first U2U relay meets the hop count of the U2U relay via which the second UE can be discovered.

For example, if the hop count of the first UE is 3 and the hop count of the U2U relay via which the second UE can be discovered is 2, it is determined that the hop count of the first UE meets the hop count of the U2U relay via which the second UE can be discovered. If the hop count of the first UE is 2 and the hop count of the U2U relay via which the second UE can be discovered is 3, it is determined that the hop count of the first UE cannot meet the hop count of the U2U relay via which the second UE can be discovered.

In the solution provided by this embodiment of the disclosure, not only is it necessary to determine whether the second UE can be discovered, but it is also necessary to determine whether the hop count of the first UE meets the condition before determining whether to add the Info ID of the second UE to the first list, so as to improve an accuracy of the updating of the first list through the above two judgments.

In some embodiments, a value of the first relay indication indicates the hop count of the U2U relay via which the second UE can be discovered.

The hop count is understood as the number of hops of the U2U relay via which the second UE can be discovered by other UEs. That is, other UEs may discover the second UE via at least one U2U relay, and the hop count is the number of the at least one U2U relay.

In an embodiment of the disclosure, if the value of the first relay indication is an integer greater than 0, it indicates that the second UE can be discovered.

For example, if the value of the first relay indication value is 2, it means that the hop count of the U2U relay via which the second UE can be discovered is 2. As another example, if the first relay indication value is 4, it means that the hop count of the U2U relay via which the second UE can be discovered is 4.

For example, the first relay indication is represented by Relay_Indication. If the Relay_Indication value is greater than 1, it means that the second UE can be discovered via one or more hops of the U2U relay.

In the solution provided by this embodiment of the disclosure, the first relay indication indicates the hop count of the U2U relay via which the second UE can be discovered, which expands the function of the first relay indication, thereby expanding the reliability of communication.

It should be noted that in this embodiment of the disclosure, the first relay indication indicates that the second UE can be discovered via the U2U relay. In other embodiments, the first UE may determine that a third UE cannot be discovered.

In some embodiments, the first UE receives a second relay indication, which indicates that the third UE cannot be discovered.

In an embodiment of the disclosure, when the second relay indication is 0 or null, the second relay indication indicates that the third UE cannot be discovered.

In some embodiments, in a case that the second relay indication indicates that the third UE cannot be discovered, the value of the second relay indication may or may not indicate a hop count of the U2U relay via which the third UE can be discovered, which is not limited by this embodiment of the disclosure.

It should be noted that in this embodiment of the disclosure, the third UE cannot be discovered means that the third UE cannot be discovered via the U2U relay.

In some embodiments, at least one of the first relay indication or the Info ID of the second UE is carried in a U2N relay discovery announcement message, which is a message broadcast by the U2N relay. The U2N relay discovery announcement message is used to announce that the second UE can be discovered via the U2U relay. In an embodiment of the disclosure, the U2N relay discovery announcement message is a U2N Relay Discovery Announcement.

In addition, the U2N relay discovery announcement message is not only used to announce that the second UE can be discovered via the U2U relay, but also used to announce that the second UE can be discovered via the U2N relay.

The second UE may be a U2N relay, and the U2N relay indicates that the U2N relay can be discovered via the U2N relay and can also be discovered via as the U2U relay by sending the U2N relay discovery announcement message.

It should be noted that the application only takes the U2N relay discovery announcement message as an example. In another embodiment, at least one of the first relay indication and/or the Info ID of the second UE is carried in a first message, which may be another type of message, which is not limited by this embodiment of the disclosure.

It should be noted that this embodiment of the disclosure is explained by taking the first relay indication indicating that the second UE can be discovered as an example. In another embodiment, if the message sent by the second UE does not include the first relay indication, it indicates that the second UE cannot be discovered.

For example, if the U2N relay discovery announcement message sent by the second UE does not include the first relay indication, it indicates that the second UE cannot be discovered. Or, if the first message sent by the second UE does not include the first relay indication, it indicates that the second UE cannot be discovered.

It should be noted that this embodiment of the disclosure involves a first relay indication and a second relay indication, the first relay indication and the second relay indication may refer to one piece of information and they are both referred to as relay indication. The relay indication distinguishes the function of the first relay indication from the function of the second relay indication with different values. For example, if the relay indication value is 0, it corresponds to the function of the second relay indication, and if the value of relay indication is an integer greater than 0, it corresponds to the function of the first relay indication.

Or, the first relay indication and the second relay indication are two different pieces of information. That is, the first relay indication and the second relay indication are transmitted, separately.

In addition, the first relay indication and the second relay indication are both used to indicate whether corresponding respective UEs can be discovered. For example, the first relay indication indicates that the second UE can be discovered, and the second relay indication indicates that the third UE cannot be discovered.

It should be noted that in the embodiments of the disclosure, "the second UE can be discovered" means that the second UE is allowed to be discovered, and "the second UE cannot be discovered" means that the second UE is not allowed to be discovered.

In some embodiments, the first UE not only maintains and updates the first list, but also broadcasts the first list periodically.

The first UE sends an announcement message periodically, to announce the first list. In some embodiments, the first UE sends the announcement message at a preset interval. The preset interval is agreed by a communication protocol, or set by the UE, or set in other ways, which is not limited by this embodiment of the disclosure. For example, the preset interval may be 1 minute, 5 minutes or the like, which is not limited by this embodiment of the disclosure.

In an embodiment of the disclosure, the announcement message includes at least one of the following:
(1) a message type of the announcement message;

The message type indicates the type of the announcement message. For example, the message type indicates that the announcement message is a broadcast message or other types of messages, which is not limited by this embodiment of the disclosure.
(2) an Info ID of the first UE;
(3) a relay service code (RSC);
(4) a target ID of the announcement message; or

For the target ID of the announcement message, devices with the same target ID may receive the announcement message.

(5) the Info ID of the second UE.

In the solution provided by this embodiment of the disclosure, the first UE broadcasts the first list periodically, so as to announce the candidate target UEs maintained by the first list, so that other UEs can communicate with any target UE via the first UE, which ensures that candidate target UEs are broadcasted in a timely manner, thereby ensuring a reliability of communication.

FIG. 3 is a flowchart of an information processing method provided by an example embodiment of the disclosure. The method is applied to the first UE and the second UE shown in FIG. 1, and includes at least part of the following contents.

At step 301, the second UE sends a first relay indication, in which the first relay indication indicates that the second UE can be discovered.

The second UE informs other devices that the second UE can be discovered by sending the first relay indication.

At step 302, the first UE receives the first relay indication.

In this embodiment of the disclosure, after the second UE sends the first relay indication, the first UE receives the first relay indication and determines that the second UE can be discovered via a U2U relay based on the first relay indication.

At step 303, in response to the first relay indication indicating that the second UE can be discovered, the first UE adds an Info ID of the second UE to a first list, in which the first list is used to store an Info ID of a candidate target UE.

In some embodiments, the first UE maintains the first list, and all the target UEs corresponding to the Info IDs stored in the first list can be applied to the U2U relay scenario. It is understood that other UEs may communicate with a target UE corresponding to any Info ID in the first list via the first UE.

In some embodiments, the first UE is a U2U relay.

In some embodiments, the second UE can be discovered means that the second UE can be discovered via the first UE, or the second UE can be discovered via a U2U relay.

In some embodiments, the first relay indication indicates that the second UE can be discovered via the U2U relay. That is, the second UE can be used as a candidate target UE in the U2U relay scenario and may communicate with other UEs via the U2U relay.

In some embodiments, the second UE is a U2N relay. That is, the U2N relay UE not only has a function for other UEs to communicate with the network device via this U2N relay, but also has a function to communicate with other UEs via the U2U relay.

In some embodiments, the Info ID of the second UE is an equipment ID of the second UE.

In some embodiments, the first relay indication is represented by Relay_Indication or by other means, which is not limited by this embodiment of the disclosure.

It should be noted that this embodiment of the disclosure takes the first relay indication as an example. In another embodiment, the first relay indication may be referred to as first indication information or indication information, or indication information of another name, which is not limited by this embodiment of the disclosure.

It should be noted that step 303 in this embodiment of the disclosure is optional. In another embodiment, the first UE may not perform step 303.

It should be noted that the steps performed by the first UE in this embodiment of the disclosure can constitute a new independent embodiment, and the steps performed by the second UE can also constitute a new independent embodiment, which is not limited by this embodiment of the disclosure.

In the solution provided by the embodiments of the disclosure, when the first UE determines that the second UE can be discovered via the U2U relay, it indicates that the second UE can be a candidate UE stored in the first list. Therefore, the first UE updates the Info ID of the second UE to the first list for storing an Info ID of the candidate UE, so as to facilitate that the other UEs can communicate with the UE corresponding to the Info ID included in the first list, which not only realizes the maintenance and updating of the first list, but also ensures the reliability of the communication carried out between UEs.

It should be noted that the embodiments of the disclosure are explained by taking the case that the first UE adds the Info ID of the second UE to the first list as an example. In other embodiments, the third UE may send a second relay indication, and the first UE receives the second relay indication. If the second relay indication indicates that the third UE cannot be discovered, the first UE does not add the Info ID of the third UE to the first list.

In this embodiment of the disclosure, if the third UE cannot be discovered, it means that the third UE cannot be a target UE of the first list. Therefore, if the second relay indication indicates that the third UE cannot be discovered, the first UE cannot add the Info ID of the third UE to the first list.

It should be noted that in this embodiment of the disclosure, if the second UE sends the second relay indication, and the second relay indication indicates that the second UE cannot be discovered, the first UE cannot add the Info ID of the second UE to the first list.

In some embodiments, if the first relay indication indicates that the second UE can be discovered, and the hop count of the first UE meets the hop count of the U2U relay via which the second UE can be discovered, the Info ID of the second UE is added to the first list, and the first list is used to store the Info ID of a candidate target UE.

In some embodiments, if the hop count of the first UE is greater than the hop count of the U2U relay via which the second UE can be discovered, it is determined that the hop count of the first U2U relay meets the hop count of the U2U relay via which the second UE can be discovered.

For example, if the hop count of the first UE is 3 and the hop count of the U2U relay via which the second UE can be discovered is 2, it is determined that the hop count of the first UE meets the hop count of the U2U relay via which the second UE can be discovered. If the hop count of the first UE is 2 and the hop count of the U2U relay via which the second UE can be discovered is 3, it is determined that the hop count of the first UE cannot meet the hop count of the U2U relay via which the second UE can be discovered.

It should be noted that the embodiments of the disclosure are explained by taking the case that the first UE adds the Info ID of the second UE to the first list as an example. In other embodiments, if the second relay indication indicates that the third UE cannot be discovered, the first UE will not add the Info ID of the third UE to the first list.

In other embodiments, if the hop count of the first UE cannot meet the hop count of the U2U relay via which the third UE can be discovered, the first UE will not add the third UE Info ID to the first list.

In other embodiments, if the second relay indication indicates that the third UE cannot be discovered and the hop count of the first UE cannot meet the hop count of the U2U relay via which the third UE can be discovered, the first UE will not add the Info ID of the third UE to the first list.

In the solution provided by this embodiment of the disclosure, if the first UE determines that the third UE cannot be discovered, or the hop count of the first UE cannot meet the hop count of the U2U relay via which the third UE can be discovered, the first UE determines not to add the Info ID of the third UE to the first list, which ensures an accuracy of maintaining and updating the first list by the first UE, thereby ensuring a reliability of communication.

In some embodiments, the first UE not only maintains and updates the first list, but also broadcasts the first list periodically.

In some embodiments, the first UE sends an announcement message at a preset interval, to announce the first list. The preset interval is agreed by a communication protocol, or set by the UE, or set in other ways, which is not limited by this embodiment of the disclosure. For example, the preset interval may be 1 minute, 5 minutes or the like, which is not limited by this embodiment of the disclosure.

In an embodiment of the disclosure, the announcement message includes at least one of the following:
(1) a message type of the announcement message;

The message type indicates the type of the announcement message. For example, the message type indicates that the announcement message is a broadcast message or other types of messages, which is not limited by this embodiment of the disclosure.
(2) a Info ID of the first UE;
(3) a RSC;
(4) a target ID of the announcement message; or

For the target ID of the announcement message, devices with the same target ID may receive the announcement message.

(5) the Info ID of the second UE.

In the solution provided by this embodiment of the disclosure, the first UE broadcasts the first list periodically, so as to announce the candidate target UEs in the U2U relay scenario, so that other UEs can communicate with any target UE via the first UE, which ensures that candidate target UEs are broadcasted in a timely manner in the U2U relay scenario, thereby ensuring a reliability of communication.

In some embodiments, the first relay indication is carried in a U2N relay discovery announcement message, and the U2N relay discovery announcement message is configured to announce that the second UE can be discovered.

In addition, the U2N relay discovery announcement message is not only used to announce that the second UE can be discovered through the U2U relay, but also used to announce that the second UE can be discovered through the U2N relay.

The second UE may be a U2N relay, and the U2N relay indicates that the U2N relay can be discovered via the U2N relay and can also be discovered via as the U2U relay by sending the U2N relay discovery announcement message.

In some embodiments, if the U2N relay discovery announcement message includes the first relay indication, the second UE can be discovered through the U2U relay.

It should be noted that this embodiment of the disclosure takes the case that the U2N relay discovery announcement message includes the first relay indication as an example. In another embodiment, the U2N relay discovery announcement message may not include a relay indication. If the U2N relay discovery announcement message does not include the first relay indication, the second UE cannot be discovered via the U2U relay.

In an embodiment of the disclosure, a first relay indication value also indicates the hop count of the U2U relay via which the second UE can be discovered.

The hop count may be understood as the number of hops of the U2U relay via which the second UE can be discovered by other UEs. That is, other UEs may discover the second UE via at least one U2U relay, and the hop count is the number of the at least one U2U relay.

In an embodiment of the disclosure, if the value of the first relay indication is an integer greater than 0, it indicates that the second UE can be discovered via the U2U relay.

For example, if the first relay indication value is 2, the hop count of the U2U relay via which the second UE can be discovered is 2. Or, if the first relay indication value is 4, the hop count of the U2U relay via which the second UE can be discovered is 4.

For example, the first relay indication is represented by Relay_Indication. If the Relay_Indication value is greater than 1, it means that the second UE can be discovered via one or more hops of the U2U relay.

In some embodiments, the second relay indication is provided, which is used to indicate that the third UE cannot be discovered. In an embodiment of the disclosure, when the second relay indication is 0 or null, the second relay indication indicates that the third UE cannot be discovered.

In the solution provided by this embodiment of the disclosure, the first relay indication indicates the hop count of the U2U relay via which the second UE can be discovered, which expands the function of the first relay indication, thereby expanding a reliability of communication.

In some embodiments, the U2N relay discovery announcement message further includes at least one of the following information:
(1) a message type of the U2N relay discovery announcement message;

The message type indicates the type of the U2N relay discovery announcement message. For example, the message type indicates that the U2N relay discovery announcement message is a broadcast message or other types of messages, which is not limited by this embodiment of the disclosure.
(2) a RSC;
(3) a source ID of the U2N relay discovery announcement message;

The source ID of the U2N relay discovery announcement message refers to an ID of a layer that sends the U2N relay discovery announcement message. In some embodiments, the source ID is an ID of layer2.

(4) a target ID of the U2N relay discovery announcement message; or
For the target ID of the U2N relay discovery announcement message, devices with the same target ID may receive the U2N relay discovery announcement message. In some embodiments, the target ID is an ID of layer2.

(5) the Info ID of the second UE.

In some embodiments, the Info ID is Announcer Info.

In some embodiments, the second UE sends the first relay indication through Mode A, which is a broadcast mode.

In this embodiment of the disclosure, the Mode A adopted by the second UE refers to the broadcast mode. That is, the second UE sends the first relay indication through the broadcast mode, and any device can receive the first relay indication sent by the second UE.

It should be noted that this embodiment of the disclosure is explained by taking the case that the second UE can be discovered as an example. In another embodiment, it is necessary to configure parameter information for the second UE through configuration information, to enable the second UE to support being discovered via the U2U relay.

In an embodiment of the disclosure, the second UE receives the configuration information, which is used to configure the parameter information for the second UE to support being discovered via the U2U relay.

In an embodiment of the disclosure, the parameter information includes at least one of the following information:
(1) a discovery ID indicating whether the second UE supports being discovered via the U2U relay;
(2) a network ID;
(3) the Info ID of the second UE;
(4) a RSC;
(5) a target ID;

For the target ID, devices with the same target ID can receive the parameter information.
(6) a Quality of Service (QoS) parameter; or
(7) a parameter effective duration.

The parameter here refers to at least one of the above parameters (1)-(6). The effective duration means that each parameter is effective within the duration.

It should be noted that the above embodiments can be divided into new embodiments or combined with other embodiments as new embodiments, and possible combinations of embodiments are not limited by the disclosure.

FIG. 4 is a block diagram of an information processing apparatus provided by an example embodiment of the disclosure. As illustrated in FIG. 4, the apparatus includes:
an adding module 401, configured to, in which a second UE can be discovered, add an Info ID of the second UE to a first list, in which the first list is configured to store an Info ID of a candidate target UE.

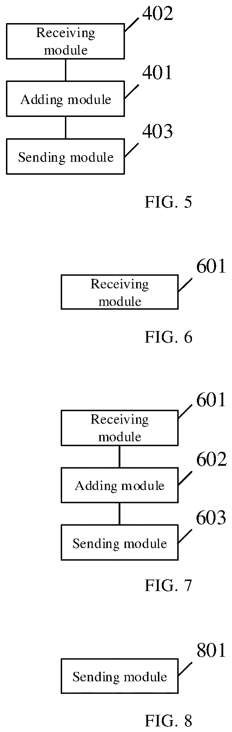

In some embodiments, as illustrated in FIG. 5, the apparatus includes: a receiving module 402, configured to receive a first relay indication, in which the first relay indication indicate that the second UE can be discovered.

In some embodiments, at least one of the relay indication or the Info ID of the second UE is carried in a U2N relay discovery announcement message, and the U2N relay discovery announcement message is configured to announce that the second UE can be discovered.

In some embodiments, the adding module 401 is further configured to: in which the second UE can be discovered, and a hop count of the first UE meets a hop count of the U2U relay via which the second UE can be discovered, add the Info ID of the second UE to the first list.

In some embodiments, a first relay indication value is configured to indicate the hop count of the U2U relay via which the second UE can be discovered.

In some embodiments, the apparatus further includes: a receiving module 402, configured to receive a second relay indication, in which the second relay indication indicates that a third UE cannot be discovered.

In some embodiments, the adding module 401 is further configured to: in response to the second relay indication indicating that the third UE cannot be discovered, not add an Info ID of the third UE to the first list.

In some embodiments, as illustrated in FIG. 5, the apparatus further includes:
a sending module 403, configured to sending an announcement message periodically, in which the announcement message is configured to announce the first list.

In some embodiments, the announcement message includes at least one of the following:
a message type of the announcement message;
an Info ID of the first UE;
a RSC;
a target ID of the announcement message; or
the Info ID of the second UE.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the apparatus can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

FIG. 6 is a block diagram of an information processing apparatus provided by an example embodiment of the disclosure. As illustrated in FIG. 6, the apparatus includes:
a receiving module 601, configured to receive a first relay indication, in which the first relay indication indicates that a second UE can be discovered.

In some embodiments, the first relay indication is carried in a U2N relay discovery announcement message, and the U2N relay discovery announcement message is configured to announce that the second UE can be discovered.

In some embodiments, a first relay indication value indicates a hop count of the U2U relay via which the second UE can be discovered.

In some embodiments, the first UE is a first U2U relay, and the apparatus further includes: an adding module 602, configured to, in response to the first relay indication indicating that the second UE can be discovered, add an Info ID of the second UE to a first list, in which the first list is configured to store an Info ID of a candidate target UE.

In some embodiments, the first UE is the first U2U relay. As illustrated in FIG. 7, the apparatus further includes:
an adding module 602, configured to, in which the first relay indication indicates that the second UE can be discovered, and a hop count of the first UE meets a hop count of the U2U relay via which the second UE can be discovered, add the Info ID of the second UE to the first list, in which the first list is configured to store an Info ID of a candidate target UE.

In some embodiments, the receiving module is further configured to: receive a second relay indication, in which the second relay indication indicates that a third UE cannot be discovered.

In some embodiments, when the second relay indication value is 0 or null, the second relay indication indicate that the third UE cannot be discovered.

In some embodiments, the adding module 602 is further configured to: in response to the second relay indication indicating that the third UE cannot be discovered, not add an Info ID of the third UE to the first list.

In some embodiments, a hop count of the first UE does not meet a hop count of the U2U relay via which the third UE can be discovered.

In some embodiments, as illustrated in FIG. 7, the apparatus further includes:
a sending module 603, configured to send an announcement message periodically, in which the announcement message is configured to announce the first list.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the apparatus can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

FIG. 8 is a block diagram of an information processing apparatus provided by an example embodiment of the disclosure. As illustrated in FIG. 8, the apparatus includes:
a sending module 801, configured to send a first relay indication, in which the first relay indication indicates that a second UE can be discovered.

In some embodiments, the first relay indication is carried in a U2N relay discovery announcement message, and the U2N relay discovery announcement message is configured to announce that the second UE can be discovered.

In some embodiments, a first relay indication value is configured to indicate a hop count of the U2U relay via which the second UE can be discovered.

In some embodiments, the sending module 801 is configured to: sending a second relay indication, in which the second relay indication further indicates that the second UE cannot be discovered.

In some embodiments, when the second relay indication is 0 or null, the second relay indication indicates that the second UE cannot be discovered.

In some embodiments, the sending module 801 is configured to: send the first relay indication through a mode A, in which the mode A is a broadcast mode.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the apparatus can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

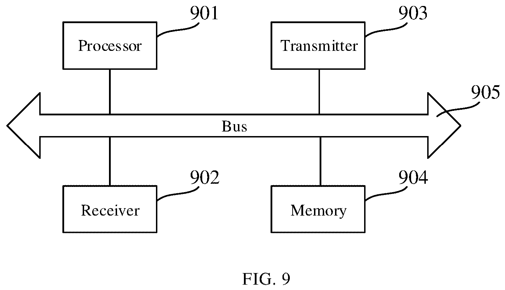

FIG. 9 is a schematic structural diagram of a communication device provided by an example embodiment of the disclosure. The communication device includes: a processor 901, a receiver 902, a transmitter 903, a memory 904 and a bus 905.

The processor 901 includes one or more processing cores. The processor 901 executes various functional applications and information processing by running software programs and modules.

The receiver 902 and the transmitter 903 may be realized as a communication component, such as a communication chip.

The memory 904 is connected to the processor 901 through the bus 905.

The memory 904 is configured to store at least one program code, and the processor 901 is configured to execute the at least one program code to realize the steps in the above method embodiments.

In addition, the communication device may be a UE. The memory 904 may be implemented by any type of volatile or non-volatile storage devices or combinations thereof. The volatile or non-volatile storage devices include but are not limited to: a magnetic disk or an optical disk, an Electrically Erasable Programmable Read-Only Memory (EEPROM), an Erasable Programmable ROM (EPROM), a Static Random Access Memory (SRAM), a Read-Only Memory (ROM), a magnetic memory, a flash memory and a programmable ROM (PROM).

In an example embodiment, a computer-readable storage medium is provided. The computer-readable storage medium stores an executable program code, and the executable program code is loaded and executed by a processor to implement the information processing method performed by the communication device in the above-mentioned method embodiments.

In an example embodiment, a chip is provided. The chip includes a programmable logic circuit and/or a program instruction. When the chip runs on a UE or an access network device, the information processing method provided in the above-mentioned method embodiments is implemented.

In an example embodiment, a communication system is provided. The communication system includes a first UE and a second UE. The first UE is used to implement the information processing method described above, and the second UE is used to implement the information processing method described above.

In an example embodiment, a computer program product is provided. When the computer program product is executed by a processor of a UE, the information processing method provided by the above-mentioned method embodiments is implemented.

Those skilled in the art understand that all or part of the steps to implement the above embodiments may be accomplished by hardware or by instructing related hardware through a program. The program may be stored in a computer-readable storage medium, which may be a ROM, a disk or an optical disk, etc.

The above are only optional embodiments of the disclosure and are not intended to limit the disclosure. Any modifications, equivalent substitutions, improvements, etc. made within the spirit and principles of the disclosure should be included in the protection scope of the disclosure.

## Claims

1. An information processing method, performed by a first user equipment (UE) acting as a first UE-to-UE (U2U) relay, comprising:
wherein a second UE can be discovered, adding an information identity (Info ID) of the second UE to a first list, wherein the first list is configured to store an Info ID of a candidate target UE.

2. The method of claim 1,further comprising:
receiving a first relay indication, wherein the first relay indication indicates that the second UE can be discovered.

3. The method of claim 2, wherein at least one of the relay indication or the Info ID of the second UE is carried in a UE-to-network (U2N) relay discovery announcement message, and the U2N relay discovery announcement message is configured to announce that the second UE can be discovered.

4. The method of any one of claims 1-3, further comprising:
wherein the second UE can be discovered, and a hop count of the first UE meets a hop count of a U2U relay via which the second UE can be discovered, adding the Info ID of the second UE to the first list.

5. The method of any one of claims 2-4, wherein a value of the first relay indication indicates a hop count of a U2U relay via which the second UE can be discovered.

6. The method of any one of claims 1-5, further comprising:
receiving a second relay indication, wherein the second relay indication indicates that a third UE cannot be discovered.

7. The method of claim 6, further comprising:
wherein the second relay indication indicates that the third UE cannot be discovered, not adding an Info ID of the third UE to the first list.

8. The method of any one of claims 1-7, further comprising:
sending an announcement message periodically, wherein the announcement message is configured to announce the first list.

9. The method of claim 8, wherein the announcement message comprises at least one of the following:
a message type of the announcement message;
an Info ID of the first UE;
a relay service code (RSC);
a target identity (ID) of the announcement message; or
the Info ID of the second UE.

10. An information processing method, performed by a first UE, comprising:
receiving a first relay indication, wherein the first relay indication indicates that a second UE can be discovered.

11. The method of claim 10, wherein the first relay indication is carried in a U2N relay discovery announcement message, and the U2N relay discovery announcement message is configured to announce that the second UE can be discovered.

12. The method of claim 10 or 11, wherein a value of the first relay indication indicates a hop count of a U2U relay via which the second UE can be discovered.

13. The method of any one of claims 10-12, wherein the first UE acts as a first U2U relay, and the method further comprises:
wherein the first relay indication indicates that the second UE can be discovered, adding an Info ID of the second UE to a first list, wherein the first list is configured to store an Info ID of a candidate target UE.

14. The method of any one of claims 10-13, wherein the first UE acts as a first U2U relay, and the method further comprises:
wherein first relay indication indicates that the second UE can be discovered, and a hop count of the first UE meets a hop count of a U2U relay via which the second UE can be discovered, adding an Info ID of the second UE to a first list, wherein the first list is configured to store an Info ID of a candidate target UE.

15. The method of any one of claims 10-14, further comprising:
receiving a second relay indication, wherein the second relay indication indicates that a third UE cannot be discovered.

16. The method of claim 15, wherein when the second relay indication is 0 or null, the second relay indication indicates that the third UE cannot be discovered.

17. The method of claim 15, further comprising:
wherein the second relay indication indicates that the third UE cannot be discovered, not adding an Info ID of the third UE to the first list.

18. The method of claim 17, wherein a hop count of the first UE does not meet a hop count of a U2U relay via which the third UE can be discovered.

19. The method of any one of claims 13-18, further comprising:
sending an announcement message periodically, wherein the announcement message is configured to announce the first list.

20. An information processing method, performed by a second UE, comprising:
sending a first relay indication, wherein the first relay indication indicates that the second UE can be discovered.

21. The method of claim 20, wherein the first relay indication is carried in a U2N relay discovery announcement message, wherein the U2N relay discovery announcement message is configured to announce that the second UE can be discovered.

22. The method of claim 20, wherein a value of the first relay indication indicates a hop count of a U2U relay via which the second UE can be discovered.

23. The method of claim 20 or 21, further comprising:
sending a second relay indication, wherein the second relay indication indicates that the second UE cannot be discovered.

24. The method of claim 23, wherein when the second relay indication is 0 or null, the second relay indication indicates that the second UE cannot be discovered.

25. The method of any one of claims 20-24, wherein sending the first relay indication comprises:
sending the first relay indication through a mode A, wherein the mode A is a broadcast mode.

26. An information processing apparatus, comprising:
an adding module, configured to, wherein a second UE can be discovered, add an Info ID of the second UE to a first list, wherein the first list is configured to store an Info ID of a candidate target UE.

27. An information processing apparatus, comprising:
a receiving module, configured to receive a first relay indication, wherein the first relay indication indicates that a second UE can be discovered.

28. An information processing apparatus, comprising:
a sending module, configured to send a first relay indication, wherein the first relay indication indicates that a second UE can be discovered.

29. A communication system comprising a first UE and a second UE, wherein the first UE is configured to perform the information processing method according to any one of claims 10-19, and the second UE is configured to perform the information processing method according to any one of claims 20-25.

30. A method, applied to a communication system comprising a first UE and a second UE, comprising:
wherein the second UE can be discovered, the first UE adding an Info ID of the second UE to a first list, wherein the first list is configured to store an Info ID of a candidate target UE.

31. A terminal, comprising:
a processor; and
a transceiver connected to the processor;
wherein the processor is configured to load and execute executable instructions to implement the information processing method according to any one of claims 1-25.
